# EUROPÄISCHE PATENTSCHRIFT

(11) **EP 2 725 325 B1**
(45) Veröffentlichungstag und Bekanntmachung des Hinweises auf die Patenterteilung: **11.12.2019**
(21) Anmeldenummer: 13187804.3
(22) Anmeldetag: 09.10.2013
(51) Int. Cl.: G01D 5/245, G01D 5/244

(54) **Positionsmesssystem**
Position measurement system
Système de mesure de position

(30) Priorität: 26.10.2012 DE 102012219607
(43) Veröffentlichungstag der Anmeldung: 30.04.2014
(73) Patentinhaber: ROBERT BOSCH GMBH, 70442 Stuttgart (DE)
(72) Erfinder: Knopf, Jochen, 97499 Donnersdorf (DE)
(74) Vertreter: Maiß, Harald

(56) Entgegenhaltungen:
- EP-A1- 0 789 226
- WO-A1-2010/112082
- US-A1- 2011 316 527

## Beschreibung

Die Erfindung betrifft ein Verfahren zur Verwendung eines Positionsmesssystems.

Aus der Praxis sind zahlreiche Anwendungen bekannt, bei denen es wünschenswert sein kann, eine Absolutposition einer ersten Komponente zu bestimmen, die sich gegenüber einer zweiten Komponente bewegt. Beispiele für eine solche Anwendung können insbesondere Linearsysteme und Linearführungen sein, die für verschiedene Anwendungen in der Handhabungstechnik, insbesondere in der Lineartechnik, eingesetzt werden können. Hierfür gibt es zahlreiche lineartechnische Einsatzmöglichkeiten als Maschinenkomponente im Maschinenbau, insbesondere in der Fertigungs- oder Automatisierungstechnik.

Beispielsweise geht aus der DE 10 2007 042 796 A1 eine Linearführung mit einem an dieser entlang bewegbaren Führungswagen hervor. Die darin beschriebene Linearführung weist eine absolute Maßverkörperung zur Bestimmung einer Absolutposition des Führungswagens im Bezug zu der Linearführung beziehungsweise zu der daran angebrachten Maßverkörperung auf.

In der US 4 009 377 A ist ein Verfahren beschrieben, das eine Absolutpositionsbestimmung eines Führungswagens entlang einer Linearführung ermöglicht. Hierfür wird für jede unterscheidbare Absolutposition des Führungswagens jeweils eine Pseudozufallsbinärsignal-Folge (PRBS), die auch unter der englischsprachigen Bezeichnung Pseudo-Random Binary Sequence (PRBS) bekannt und geläufig ist, mittels eines Schieberegisters erzeugt und auf eine entlang der Linearführung angeordnete Maßverkörperung aufgebracht. Ein gegenüber der Maßverkörperung beweglicher Sensor kann mehrere nebeneinander angeordnete Bits der Pseudozufallsbinärsignal-Folge (PRBS) abtasten. Zur Bestimmung der Absolutposition des Sensors und damit der Absolutposition des Führungswagens entlang der Maßverkörperung wird ein Schieberegister mit einer Bitfolge befüllt, die einer Nullposition der Maßverkörperung entspricht. Anschließend wird das Schieberegister so oft weiter getaktet, bis dessen Inhalt mit dem Messwert des Sensors übereinstimmt. Die erfasste Anzahl der Weitertaktungen ist ein Maß für die Absolutposition gegenüber der Maßverkörperung.

Nachteilig daran ist, dass es durch zahlreiche Störeinflüsse zu einem Fehler beim Abtasten der Maßverkörperung beziehungsweise bei der Bestimmung der korrekten Absolutposition kommen kann. Dadurch kann eine Verfälschung des Abtastergebnisses beziehungsweise eine fehlerhafte Absolutpositionsbestimmung verursacht werden. Beispiele für diese Fehler verursachenden Störeinflüsse sind Rauschen oder ungewollte elektrische oder elektromagnetische Effekte, die einen Bitfehler verursachen können. In Folge dieser fehlerhaften Abtastung beziehungsweise fehlerhaften Positionsbestimmung kann es beispielsweise zu einem Werkstückausschuss kommen, wenn aufgrund der fehlerhaften Positionsbestimmung und einer dadurch verursachten Fehlsteuerung des Führungswagens Fertigungstoleranzen überschritten werden. Insbesondere auch in sicherheitskritischen Anwendungen einer Linearführung ist es wünschenswert, eine hohe Zuverlässigkeit bei der Absolutpositionsbestimmung eines Führungswagens entlang einer Linearführung zu erreichen.

Die Aufgabe der Erfindung ist es daher, ein Verfahren zum Betrieb eines Positionsmesssystem zur Verfügung zu stellen, das eine zuverlässige Absolutpositionsbestimmung ermöglicht.

Diese Aufgabe wird gelöst durch ein Verfahren nach den unabhängigen Ansprüchen 1 und 2.

Vorteilhafte Weiterbildungen der Erfindung sind in den Unteransprüchen angegeben.

Ein dem erfindungsgemäßen Verfahren zugrunde liegendes Positionsmesssystem, das im Weiteren als erfindungsgemäßes Positionsmesssystem angesprochen wird, weist ein erstes Teil und ein gegenüber dem ersten Teil bewegbares zweites Teil auf. Das erste Teil weist eine Maßverkörperung mit einer Vielzahl von in einer Reihe angeordneten Markierungen auf, die jeweils zwei voneinander unterschiedliche Werte annehmen kann. Eine Anzahl m unmittelbar aufeinander folgender Markierungen innerhalb einer Markierungsreihe codiert eine eindeutige Absolutposition entlang der Maßverkörperung und eine Anzahl m-1 unmittelbar aufeinander folgender Markierungen codiert keine eindeutige Absolutposition. Das zweite Teil weist eine Abtasteinrichtung mit einer Anzahl k von Einzelsensoren zur Abtastung von einer Anzahl n unmittelbar aufeinander folgender Markierungen auf, wobei die Abtasteinrichtung zur Positionsermittlung des zweiten Teils gegenüber dem ersten Teil mit einer Auswerteeinrichtung funktional verbunden ist. Mit dem Teilungsabstand λ der Maßverkörperung und dem Teilungsabstand δ der Einzelsensoren gilt die Beziehung δ = λ × n ÷ k.

Erfindungsgemäß ist die Bedingung n > m erfüllt, wobei dabei ein Abtastfehler der Abtasteinrichtung mittels der Auswerteeinrichtung erkennbar ist.

Beispielsweise können das erste Teil eine Linearführung und das zweite Teil ein entlang der Linearführung bewegter Führungswagen sein. Dabei kann die Maßverkörperung entlang der Linearführung angeordnet sein. Des Weiteren können die Markierungsreihen in Form von Bitfolgen vorgesehen sein. Es ist beispielsweise möglich, dass die Auswerteeinrichtung als ein Mikroprozessor und ein Speicher oder alternativ als ein integrierter Schaltkreis in Form eines so genannten Field Programmable Gate Array (FPGA) ausgebildet ist.

Damit ermöglicht es das erfindungsgemäße Positionsmesssystem auf besonders einfache, effiziente und zuverlässige Weise, einen Fehler zu erkennen, der beispielsweise während des Abtastens durch zahlreiche Störeinflüsse auftreten kann. Dabei kann die Vielzahl von Markierungen der Maßverkörperung so gewählt werden, dass die zur Fehlererkennung abzutastende Anzahl von Markierungen möglichst gering ist. Dadurch ist es nicht zwingend notwendig, die absolutkodierte Maßverkörperung und/oder die Abtasteinrichtung in ihrer Baugröße gegenüber den bisher bekannten Bauformen signifikant zu vergrößern. Demzufolge kann an der Maßverkörperung eine einzige Spur ausreichen, die sämtliche zur Positionsbestimmung und Fehlererkennung benötigten Informationen umfasst.

Die zur Positionsbestimmung abzutastenden Markierungen können dabei mechanisch, optisch oder magnetisch aufgebracht beziehungsweise in die Maßverkörperung eingebracht werden. Beispielsweise können die Markierungen auch in Form von Lochmustern in die Maßverkörperung eingeprägt werden, deren Einfluss auf die Induktivität eines Spulen-Sensors für die Abtastung derselben verwendet werden kann.

Besonders zuverlässig und effizient kann die Fehlererkennung erfolgen, wenn die Markierungsreihen jeweils in Form einer einzigen, gemeinsamen Pseudozufallsbinärsignal-Folge (PRBS), die auch als so genannte Pseudo-Random Binary Sequence (PRBS) bekannt und geläufig ist, erzeugt werden. Diese hat die vorteilhafte Eigenschaft, dass auf der Länge einer unterscheidbaren Position nur ein einziges Bit des die Position beschreibenden Codes untergebracht werden muss, anstatt des gesamten Codes. Dies erlaubt trotz wenig Redundanz, eine hohe Informationsmenge. Es kann auch eine Pseudozufallsbinärsignal-Folge (PRBS) generiert werden, die die vorteilhafte Eigenschaft besitzt, dass neben dem Code einer Position auch noch ein Bruchteil der direkt benachbarten Positionen enthalten ist. Durch das Erfassen und Auswerten beider Informationen ist eine 1-Bit-Fehlererkennung möglich. In einem solchen Fehlerfall kann zudem das Bit bestimmt werden, welches fehlerhaft abgetastet beziehungsweise erfasst wurde.

Eine besonders vorteilhafte Ausführungsform der Erfindung sieht vor, dass die Bedingung 2^{(n-m)} > n erfüllt ist, wobei die Auswerteeinrichtung einen Ablesefehler wenigstens eines der Einzelsensoren korrigieren kann. Damit können Fehler, die beispielsweise beim Einsatz einer Linearführung, deren Absolutpositionsbestimmung mit dem erfindungsgemäßen Positionsmesssystem erfolgt, bereits korrigiert werden, bevor sie sich negativ auswirken. Beispielsweise ist es denkbar, dass in Fällen, in denen eine Linearführung in der Fertigungstechnik eingesetzt wird, der Werkstückausschuss durch das Vermeiden von Fehlpositionen des Führungswagens reduziert wird. Auch bei sicherheitsgerichteten Systemen kann die erfindungsgemäße Fehlererkennung mit Fehlerkorrektur einen Sicherheits- beziehungsweise Qualitätszuwachs bedeuten.

Eine weitere vorteilhafte Ausführungsform der Erfindung sieht vor, dass die Bedingung 2^{(n-m-1)} < n erfüllt ist. Dann kann die Auswerteeinrichtung einen Abtastfehler eines einzigen Einzelsensors korrigieren. Damit ist es möglich, die Anzahl der benötigten Einzelsensoren auf die kleinstmögliche Anzahl zu reduzieren.

Beispielsweise kann für eine Fehlerkorrektur in einer oben beschriebenen Pseudozufallsbinärsignal-Folge (PRBS) eine Fehlerkorrektur-Methode realisiert werden, die auf einem so genannten Hamming-Code basiert. Dem Hamming-Code liegt die Idee zugrunde, für ein zu sicherndes Code-Wort fester Länge eine bestimmte Menge von Paritätsbits zu benutzen und diese unterschiedlich zu berechnen. Dabei macht sich ein Abtastfehler dadurch bemerkbar, dass manche Paritätsbits inkorrekt sind, während andere Paritätsbits korrekt sind. Die Unterscheidung, ob ein Paritätsbit inkorrekt oder korrekt ist, richtet sich dabei nach der Übereinstimmung der abgetasteten Paritätsbits mit den nach der Übertragung aus den Bits der zu sichernden Bitfolge berechneten Paritätsbits. Somit kann jede Kombination aus inkorrekten und korrekten Paritätsbits eindeutig einem bestimmten Bit der gesamten abgetasteten Bitfolge, inklusive den Paritätsbits selbst, zugeordnet werden. Dadurch ist es möglich, Fehler zu korrigieren. Erfindungsgemäß kann eine auf dem Hamming-Code basierende Fehlerkorrektur dadurch erreicht werden, dass die Rückkopplungs-Bitfolge, das heißt die Rückkopplungs-Sequenz, selbst eine Pseudozufallsbinärsignal-Folge (PRBS) ist. Dabei kann die Länge der Zustände dieser Pseudozufallsbinärsignal-Folge (PRBS) gleich der Anzahl der verwendeten Paritätsbits sein.

Die Erfindung sieht vor, dass in der Auswerteeinrichtung eine erste Wertetabelle mit einer Vielzahl von Zeilen erzeugt und/oder vorgehalten wird, wobei jede Zeile eine Positionsinformation und eine Fehlerinformation enthält. Mithilfe der Wertetabelle kann mittels der Auswerteeinrichtung überprüft werden, ob eine an der Maßverkörperung abgetastete Absolutposition einer theoretisch möglichen Soll-Absolutposition, das heißt einer Positionsinformation einer bestimmten Zeile der ersten Wertetabelle entspricht. Dabei kann die Wertetabelle beispielsweise so konfiguriert sein, dass die Fehlerinformation zu einer in einer Zeile der Wertetabelle aufgeführten Absolutposition drei Zustände einnimmt, nämlich "kein Fehler", "korrigierbarer Fehler" oder "nicht korrigierbarer Fehler". Für eine als "nicht korrigierbarer Fehler" gekennzeichnete Tabellezeile kann die Positionsinformation ein Dummywert sein.

Die Erfindung sieht vor, dass die Auswerteeinrichtung zur Ausführung eines Verfahrens mit den folgenden Schritten eingerichtet ist:
- Auswählen einer bestimmten Zeile der ersten Wertetabelle anhand von Abtastwerten sämtlicher Einzelsensoren der Abtasteinrichtung ,
- Ausgeben eines Positionswertes und/oder eines Fehlersignals aus der bestimmten Zeile.

In anderen Worten wird die erste Wertetabelle mit den Messwerten für die einzelnen Markierungen der Maßverkörperung adressiert. Damit lässt sich eine bestimmte Zeile innerhalb der ersten Wertetabelle ermitteln sowie ein entsprechender Positionswert und/oder ein Fehlersignal aus der bestimmten Zeile auslesen und ausgeben.

Die Erfindung sieht vor, dass die erste Wertetabelle nach einem Verfahren mit den folgenden Schritten erzeugt wird:
a) Markieren sämtlicher Zeilen der ersten Wertetabelle mit der Fehlerinformation "nicht korrigierbarer Fehler",
b) Eintragen einer eindeutigen Absolutposition als Positionsinformation für jede Stellung, die das zweite Teil gegenüber dem ersten Teil einnehmen kann, wobei die betreffende Zeile mit der Fehlerinformation "kein Fehler" markiert wird,
c) Invertieren des Messwertes für jede Markierung der Maßverkörperungfür jede Stellung des zweiten Teils gegenüber dem ersten Teil, wobei die entsprechende Zeile der ersten Wertetabelle nach dem Invertieren mit der Fehlerinformation "korrigierbarer Fehler" markiert wird.

Mit p Prüfbits können 2^{p} verschiedene Zustände kodiert werden. Damit dürften maximal n = 2^{p} - p - 1 Messbits vorhanden sein, damit eine 1-Bit-Fehlerkorrektur möglich ist. Um für eine vorgegebene Erzeugerfunktion herauszufinden, ob die 1-Bit-Fehlerkorrektur möglich ist und um diese tatsächlich durchzuführen, kann eine beispielhafte Wertetabelle wie folgt konstruiert werden.

Die Wertetabelle wird mit allen Sensor-Bits adressiert und gibt in jeder Zeile einen Positionswert und einen Fehlerzustand an. Der Fehlerzustand kann folgende Werte annehmen, nämlich wie oben beschrieben, "kein Fehler", "korrigierbarer Fehler" oder "nicht korrigierbarer Fehler".

Im Ausgangszustand werden alle Zeilen der Wertetabelle mit "nicht korrigierbarer Fehler" gekennzeichnet. Sodann wird in allen Zeilen, die einer zulässigen Bitfolge der Pseudozufallsbinärsignal-Folge (PRBS) der Maßverkörperung entsprechen, der zugeordnete Positionswert eingetragen, wobei die Zeile mit "kein Fehler" markiert wird.

Anschließend kann für alle Bitpositionen von allen zulässigen Bitfolgen die betreffende Bitposition invertiert werden. Danach kann geprüft werden, ob die entsprechende Zeile der Wertetabelle mit "nicht korrigierbarer Fehler" gekennzeichnet ist. Ist dies der Fall, kann der Positionswert der betreffenden zulässigen Bitfolge eingetragen werden, wobei die Zeile mit "korrigierbarer Fehler" gekennzeichnet wird. Im anderen Fall ist die vorliegende Erzeugerfunktion nicht für eine 1-Bit-Fehlerkorrektur geeignet. Die Erzeugerfunktion ist für die 1-Bit-Fehlerkorrektur geeignet, wenn alle obigen Tests positiv verlaufen.

Mittels eines Computers können alle Erzeugerfunktion getestet werden. Wenn m Messbits vorhanden sind, ist der vorstehende Test (2^{m} - 1)-mal durchzuführen, um alle zulässigen Erzeugerfunktionen herauszufinden. Um die tatsächliche Absolutpositionsmessung durchzuführen, kann die Wertetabelle mit allen Sensor-Bits adressiert werden, wobei anschließend der Positionswert und der Fehlerzustand ausgelesen werden können.

In einer alternativen, vorteilhaften Ausführungsform der Erfindung ist vorgesehen, dass in der Auswerteeinrichtung eine zweite Wertetabelle und eine dritte Wertetabelle erzeugt und/oder vorgehalten werden, wobei die zweite Wertetabelle eine Vielzahl von Zeilen aufweist und jede Zeile eine Positionsinformation und einen Hilfswert als Fehlerinformation enthält. Der Hilfswert beziehungsweise die Fehlerinformation kann beispielweise eine rechnerische Reihenfortsetzung sein, das heißt eine rechnerische Fortsetzung der jeweiligen Markierungsreihe sein. Die Dritte Wertetabelle kann einen Korrekturwert und/oder einen Fehlerzustand enthalten.

In dieser alternativen Ausführungsform werden also zwei separate Wertetabellen verwendet. Das Aufteilen von Fehlererkennungsinformationen und Fehlerkorrekturinformationen auf zwei Wertetabelle bietet den Vorteil, dass der Umfang sowohl der zweiten Wertetabelle als auch der dritten Wertetabelle gegenüber einer einzigen Wertetabelle, die sämtliche Informationen enthält, reduziert ist.

Es ist vorteilhaft, wenn die Auswerteeinrichtung zur Ausführung eines Verfahrens mit den folgenden Schritten eingerichtet ist:
a) Auswählen einer bestimmten Zeile der zweiten Wertetabelle anhand der Messwerte für eine Anzahl m von Markierungen der Maßverkörperung,
b) Auswählen einer bestimmten Zeile der dritten Wertetabelle anhand einer XOR-Verknüpfung der Messwerte der verbleibenden (n-m) Markierungen mit einem aus der bestimmten Zeile der zweiten Wertetabelle erhaltenen Hilfswert ,
c) Korrigieren der Messwerte aus Schritt a) mittels eines Korrekturwertes, der der bestimmten Zeile der dritten Wertetabelle aus Schritt b) entnommen wird,
d) Auswählen einer bestimmten Zeile der zweiten Wertetabelle, anhand der unter Schritt c) korrigierten Messwerte, und Ausgeben der entsprechenden Positionsinformation dieser bestimmten Zeile.

Mit anderen Worten wird die zweite Wertetabelle mit einer Teilbitfolge einer Anzahl m der Anzahl n von Messwerten für die Markierungen der Maßverkörperung adressiert. Dabei kann in der bestimmten Zeile angegeben sein, wie sich die Bitfolge der Maßverkörperung auf Basis der Teilbitfolge der abgetasteten Positionsbestimmungskodierung fortsetzen müsste, wobei die Bitanzahl dieser rechnerischen Fehlererkennungskodierung der Bitanzahl der abgetasteten Fehlererkennungskodierung entspricht. Weiter kann eine XOR-Verknüpfung zwischen der rechnerischen Fehlererkennungskodierung und der abgetasteten Fehlererkennungskodierung durchgeführt werden. Sollte das Ergebnis der XOR-Verknüpfung in diesem Fall Null sein, könnte darauf geschlossen werden, dass kein Fehler in der Abtastung der Maßverkörperung vorliegt. Sollte sich das Ergebnis der XOR-Verknüpfung von Null unterscheiden, würde das Ergebnis dieser Berechnung eine Information über die Bit-Position des Fehlers enthalten.

Weiter könnte die dritte Wertetabelle mit dem Ergebnis der oben genannten XOR-Verknüpfung adressiert werden. Dabei könnte die zweite Wertetabelle einen Korrekturwert und einen dazugehörigen Fehlerstatus enthalten. Beachtenswert ist dabei, dass der Korrekturwert ausschließlich an der Bit Position der abgetasteten Fehlererkennungskodierung einen Wert 1 aufweist, an der der 1 Bit Fehler vorhanden ist. Der Fehlerstatus könnte beispielsweise "kein Fehler", "korrigierbarer Fehler" oder "nicht korrigierbarer Fehler" sein. Beachtenswert ist weiterhin, dass die zweite Wertetabelle mit der oben genannten XOR-Verknüpfung aus der abgetasteten Fehlererkennungskodierung und dem Korrekturwert adressiert wird.

Vorteilhafterweise kann die Vielzahl von Markierungen der Maßverkörperung mittels eines rückgekoppelten Schieberegisters erzeugt werden, das eine Anzahl m von Flip-Flops aufweist. Dabei kann wenigstens eine XOR- oder XNOR-Verknüpfung zwischen einem Ausgangs-Flip-Flop und wenigstens einem weiteren Flip-Flop des Schieberegisters auf ein Eingangs-Flip-Flop rückgekoppelt sein.

In anderen Worten kann die für die Erfindung verwendbare Pseudozufallsbinärsignal-Folge (PRBS) mit einem rückgekoppelten Schieberegister erzeugt werden, das auch unter der englischsprachigen Bezeichnung Linear Feedback Shift Register bekannt und geläufig ist. Ein solches rückgekoppeltes Schieberegister kann eine bestimmte, aber je nach Einsatzbereich beliebig variable Anzahl von Registern beispielsweise in Form von D-Flip-Flops aufweisen. Gängige Werte für die Anzahl von Registern sind beispielsweise 4, 8, 16, oder 32. Jedoch ist auch eine beliebige Anzahl von Registern möglich, nämlich beispielsweise 7, 9, 13, 15 oder 21.

Zwischen bestimmten Flip-Flops können Abzweigungen zu weiteren Flip-Flops vorgesehen sein, die die Rückkopplungen des Schieberegisters darstellen. Dabei sind die Anzahl und die Position dieser Abzweigungen festlegbar. Die konkrete Auswahl dieser Abzweigungen wird im Rahmen dieser Anmeldung auch als Erzeugerfunktion bezeichnet.

Beispielsweise kann ein Schieberegister konfiguriert werden, mit dem eine Pseudozufallsbinärsignal-Folge (PRBS) erzeugbar ist, die die Erkenntnis nutzt, dass sowohl für die Berechnung einer Pseudozufallsbinärsignal-Folge als auch für eine Berechnung eines Paritätsbits, das für den Einsatz bei einer Fehlererkennung bekannt ist, jeweils XOR-Verknüpfungen verwendet werden. Aus dieser Feststellung lässt sich folgern, dass ausgehend von einer beliebigen Teilsequenz beziehungsweise Teilbitfolge einer Pseudozufallsbinärsignal-Folge (PRBS), jedes weitere aus dieser Teilbitfolge erzeugte Bit der Pseudozufallsbinärsignal-Folge (PRBS) als Paritätsbit der betrachteten Teilbitfolge aufgefasst werden kann.

Ausgehend von dieser Folgerung, kann die betrachtete Teilbitfolge der Pseudozufallsbinärsignal-Folge (PRBS) um die aus dieser Teilbitfolge berechneten Paritätsbits erweitert werden, so dass jedes Bit der Teilbitfolge durch eine Paritätsberechnung geschützt ist. Tritt ein 1-Bit Fehler bei der Abtastung dieser Kodierung auf, so kann dieser erkannt werden. Mit einer solchen Pseudozufallsbinärsignal-Folge (PRBS) kann also auf besonders einfache Weise eine 1-Bit Fehlererkennung implementiert werden. Dabei grenzen die Paritätsbits jeweils direkt an die abgetastete Teilbitfolge der Pseudozufallsbinärsignal-Folge (PRBS) an, so dass keine unbenutzten Bits dazwischen angeordnet sind. Auf diese Weise lässt es die Erfindung zu, einen als Abtasteinrichtung verwendeten Sensor mit einer relativ geringen Baugröße zu verwenden.

Zur Veranschaulichung dieser erfindungsgemäßen Idee zur 1-Bit Fehlererkennung beim Abtasten einer Pseudozufallsbinärsignal-Folge (PRBS) kann die nachfolgende, beispielhaft vereinfachte Darstellung verwendet werden.

| Bitfolge | 0 | 0 | 1 | 1 | 1 | 0 | 1 | 0 | 0 |
|---|---|---|---|---|---|---|---|---|---|
| [Index] | [8] | [7] | [6] | [5] | [4] | [3] | [2] | [1] | [0] |
| [Takt 0] | | | | | | | \|b0 | b1 | b2 \| |
| [Takt 1] | | | | | | \|b0 | b1 | b2\| | |
| [Takt 2] | | | | | \|b0 | b1 | b2\| | | |
| [Takt 3] | | | | \|b0 | b1 | b2\| | | | |
| [Takt 4] | | | \|b0 | b1 | b2\| | | | | |
| [Takt 5] | | \|b0 | b1 | b2\| | | | | | |
| [Takt 6] | \|b0 | b1 | b2\| | | | | | | |

Die dargestellte Bitfolge (001110100) ist eine mittels eines bestimmten rückgekoppelten Schieberegisters erzeugte Pseudozufallsbinärsignal-Folge (PRBS).. Daraus ergibt sich, dass man eine solche Pseudozufallsbinärsignal-Folge (PRBS) einfach, wie oben gezeigt, in einer Dimension darstellen kann. In diesem Beispiel bezeichnet jede Teilsequenz beziehungsweise jede Teilbitfolge b0, b1 und b2 aus drei Bit eine eindeutige Position innerhalb der Gesamtsequenz beziehungsweise der gesamten Bitfolge. Eine für die praktische Anwendung vorteilhafte Eigenschaft ist, dass solche eindeutigen Positionen zwar durch mehrere Bits repräsentiert werden, aber nur eine "Bit-Breite" voneinander entfernt sind. Vorteilhafterweise lässt sich diese Sequenz direkt in eine eindimensionale Maßverkörperung umwandeln, bei der die Auflösung der Position genau einer Bit-Breite entspricht.

Die erfindungsgemäße Fehlererkennung lässt sich von dieser beispielhaften Bitfolge (001110100) ausgehend gut veranschaulichen. Angenommen, die zu messende Teilsequenz beziehungsweise Teilbitfolge wären die drei Bits an den Indexpositionen [5], [4] und [3], dann stellt das Bit an der Indexposition [6] eine XOR-Verknüpfung, also ein Paritätsbit, zu den Bits [4] und [3] dar. Das Bit an der Indexposition [7] dieser Bitfolge ist das Paritätsbit zu den Bits [5] und [4]. Um sicherzustellen, dass beim Abtasten der Bits [5], [4] und [3] kein 1-Bit Fehler aufgetreten ist, können zusätzlich die Bits and den Indexpositionen [7] und [6] abgetastet und deren Paritätsbeziehung überprüft werden. Dabei ist es zwar denkbar, dass beim Abtasten dieser zusätzlichen Bits ebenfalls Fehler auftreten, allerdings kann auch dabei ein 1-Bit Fehler zuverlässig erkannt werden.

Die Anzahl der Bits, die dabei zusätzlich zur Teilsequenz beziehungsweise zur Teilbitfolge abgetastet und/oder überprüft werden müssen, ist abhängig von der Rückkopplungs-Kombination, das heißt der Anzahl und der Position der Rückkopplungen, des die Pseudozufallsbinärsignal-Folge (PRBS) erzeugenden rückgekoppelten Schieberegisters. Innerhalb einer bestimmten Pseudozufallsbinärsignal-Folge (PRBS) ist diese Anzahl jedoch für alle möglichen Teilsequenzen beziehungsweise Teilbitfolgen identisch.

Um dabei die Anzahl der benötigten zusätzlichen Bits zu minimieren, kann die Rückkopplungs-Kombination optimiert werden. Für die Paritätsberechnung würde bereits ein einziges zusätzliches Bit genügen. Hiefür würde allerdings vorausgesetzt werden, dass alle Rückkopplungen des erzeugenden Schieberegisters in die Berechnung eingehen. Allerdings würde dies nur Pseudozufallsbinärsignal-Folgen (PRBS) erzeugen, die für eine praktische Anwendung an der Maßverkörperung zu kurz sind. Für eine Anwendung mit genau zwei Paritätsbits muss die Rückkopplungs-Kombination mindestens jedes zweite Register des erzeugenden Schieberegisters beinhalten.

Dies lässt sich wie folgt verallgemeinern: Sei R die Anzahl der Register und T die Rückkopplungs-Kombination eines rückgekoppelten Schieberegisters: Die damit generierte PRBS enthält eine gewisse Menge eindeutiger Zustände, die jeweils durch R Bits repräsentiert werden. Außerdem sei M die maximal in T vorkommende Anzahl von direkt benachbarten und nicht in die Rückkopplungsberechnung eingehenden Registern des rückgekoppelten Schieberegisters. Dann müssten, um einen Zustand abzutasten und dabei 1-Bit Fehler erkennen zu können, R+M+1 Bits abgetastet werden. Durch dieses Vorgehen ist die Anzahl der benötigten Paritätsbits minimal. In anderen Worten, ist die Anzahl der benötigten Paritätsbits gleich der Anzahl der nicht in die Rückkopplungsberechnung eingehenden Bits des rückgekoppelten Schieberegisters plus 1.

Eine besonders vorteilhafte Weiterbildung des erfindungsgemäßen Verfahrens sieht vor, dass die Erzeugung der Positionsbestimmungskodierung und/oder der Fehlererkennungskodierung der Maßverkörperung und/oder die Erzeugung der Prüfkodierung mit einer bestimmten Erzeugerfunktion durchgeführt werden.

Besonders effizient lässt sich das erfindungsgemäße Positionsmesssystem mit einer Linearführung einsetzen. Beispielsweise kann damit eine Absolutpositionsbestimmung für hochpräzise Aufgaben in der Fertigungstechnik oder sicherheitskritische Aufgaben bewältigt werden.

Im Folgenden werden Ausführungsbeispiele der Erfindung anhand von Zeichnungen näher erläutert. Es zeigen:
Figur 1 eine schematische Draufsicht auf ein Linearlager mit einer Linearführung und einem daran entlang bewegbaren Führungswagen;
Figur 2 eine Draufsicht auf eine Linearführung mit einem Führungswagen in einem Querschnitt;
Figur 3 ein Ausführungsbeispiel eines Schieberegisters zur Erzeugung einer zur Kodierung einer Maßverkörperung geeigneten Pseudozufallsbinärsignal-Folge (PRBS);
Figur 4 eine grobschematische Ansicht eines ersten Ausführungsbeispiels für eine Anordnung zur Abtastung und Auswertung einer Maßverkörperung; und
Figur 5 eine grobschematische Ansicht eines zweiten Ausführungsbeispiels für eine Anordnung zur Abtastung und Auswertung einer Maßverkörperung.

Gleiche Komponenten sind in den Figuren durchgängig mit gleichen Bezugszeichen versehen.

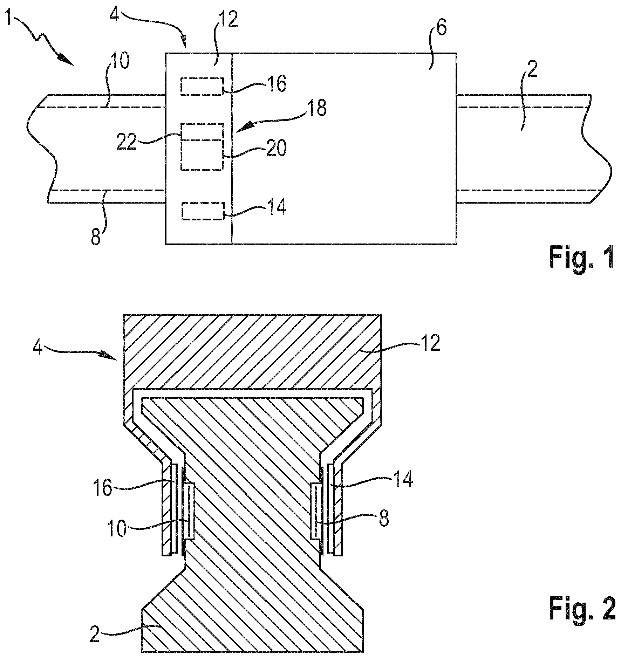

Figur 1 zeigt ein Ausführungsbeispiel eines Linearlagers 1 in einer schematisierten Draufsicht. Für ein solches Linearlager gibt es zahlreiche Anwendungsgebiete, beispielsweise als Maschinenelement in der Fertigungstechnik oder der Automatisierungstechnik.

Das Linearlager 1 weist eine Linearführung 2 mit einem integrierten Positionsmesssystem 4 auf. In diesem Ausführungsbeispiel ist die Linearführung 2 in Form einer Schiene ausgebildet, an der ein Führungswagen 6 linearbeweglich gelagert ist. Der Führungswagen 6 lässt sich in Längsrichtung entlang der Linearführung 2 in zwei entgegen gesetzte Richtungen gesteuert antreiben.

Das Positionsmesssystem 4 der Linearführung 2 umfasst zwei Maßverkörperungen 8, 10, die auf zwei sich gegenüber liegenden Seiten der Linearführung 2 angeordnet sind, wobei eine absolutkodierte Maßverkörperung 8 und eine inkrementelle Maßverkörperung 10 vorgesehen sind. Das Positionsmesssystem 4 verfügt weiter über einen Messkopf 12, der dem Führungswagen 6 für eine gemeinsame Linearbewegung entlang der beiden Maßverkörperungen 8, 10 zugeordnet ist. Der Führungswagen 6 weist eine erste Abtasteinrichtung 14 mit einer Anzahl k von Einzelsensoren 15 zur Abtastung der absolutkodierten Maßverkörperung 8 und eine zweite Abtasteinrichtung 16 in Form eines Sensors zur Abtastung der inkrementellen Maßverkörperung 6 aufweist. Der Messkopf 12 umfasst auch eine Auswerteeinrichtung 18 in Form eines Mikroprozessors 20 und eines Speichers 22.

In Figur 2, die eine Draufsicht auf eine Linearführung 2 mit einem daran linearbeweglich gelagerten Führungswagen 6 in einem Querschnitt darstellt, ist gut zu erkennen, dass sowohl die absolutkodierte Maßverkörperung 8 als auch die inkrementelle Maßverkörperung 10 in die Linearführung 2 integriert sind.

Das Positionsmesssystem 4 bestimmt zunächst einmalig bei dessen Inbetriebnahme die Absolutposition, wobei anschließend nur noch eine inkrementelle Messung bzw. Positionsbestimmung durchgeführt wird. Allerdings kann für das Positionsmesssystem 4 auch festgelegt werden, dass insbesondere in sicherheitskritischen Systemen auch während des laufenden Betriebs weitere Absolutpositionsbestimmungen erfolgen. Für diese weiteren Bestimmungen der Absolutposition ist festlegbar, dass sie periodisch mit einem applizierbaren Intervall oder auch bei applizierbaren Ereignissen erfolgen, die innerhalb des Positionsmesssystems 4 oder des Linearlagers 1 auftreten.

Die absolutkodierte Maßverkörperung 8 ist in diesem Ausführungsbeispiel als Metallschiene ausgeführt, in die binäre Informationen, das heißt jeweils bestimmte Bitfolgen, in Form von Lochmustern eingeprägt sind. Damit ist jeder unterscheidbaren Position entlang der absolutkodierten Maßverkörperung 8 eine bestimmte, eindeutige binäre Kodierung zugewiesen. Die erste Abtasteinrichtung 14 zur Abtastung der auf diese Weise absolutkodierten Maßverkörperung 8 beziehungsweise deren Anzahl n von Einzelsensoren 15 ist als Spulen-Sensor ausgeführt, dessen Induktivität über den Einfluss durch die in die Maßverkörperung 8 eingeprägten Löcher beeinflusst wird. Auf diese Weise lässt sich die Maßverkörperung 8 zuverlässig und weitgehend verschleißfrei mittels der ersten Abtasteinrichtung 14 abtasten und daraus eine bestimmte Position an der Maßverkörperung 8 bestimmen. Diese induktive Abtastmethode ist weitgehend unempfindlich gegenüber Verschmutzungen oder Verunreinigungen der absolutkodierten Maßverkörperung 8.

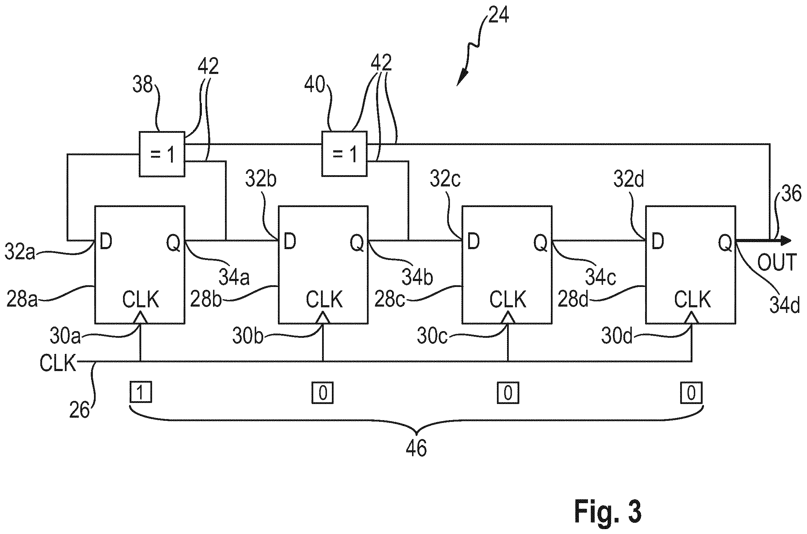

Unter Bezugnahme auf Figur 3, die ein rückgekoppeltes Schieberegister 24 zur Erzeugung einer für die Kodierung der Maßverkörperung 8 geeigneten Pseudozufallsbinärsignal-Folge (PRBS) darstellt, wird nachfolgend die Erzeugung einer für die vorliegende Erfindung geeigneten Pseudozufallsbinärsignal-Folge (PRBS) beschrieben. Das in Figur 3 gezeigte Schieberegister 24 weist m Stufen beziehungsweise Register auf, wobei m eine Anzahl von Messbits ist. Die Anzahl der Zustände, die mit diesem Register erzeugt werden können, entspricht 2^{m}-1.

Weiter umfasst das Schieberegister 24 einen taktbaren Eingang 26, der mit einer Anzahl m von Flip-Flops 28a bis 28m verbunden ist. In diesem Ausführungsbeispiel sind genau vier Messbits vorgesehen (m = 4), das heißt es sind genau vier Flip-Flops 28a bis 28d vorhanden. Jedes der Flip-Flops 28a bis 28d verfügt über einen Takt-Eingang (CLK) 30a bis 30d, einen Dateneingang 32a bis 32d und einen Datenausgang 34a bis 34d.

Das Schieberegister 24 weist weiter einen Ausgang 36 auf, an dem die mit dem Schieberegister 24 erzeugte Pseudozufallsbinärsignal-Folge (PRBS) ausgegeben wird. Zur Rückkopplung verfügt das rückgekoppelte Schieberegister 24 weiter über eine festlegbare beziehungsweise variable Anzahl von XOR- oder XNOR-Gattern, wobei in diesem Ausführungsbeispiel ein erstes XOR-Gatter 38 und ein zweites XOR-Gatter 40 vorgesehen sind. Die XOR-Gatter 38, 40 können als eine Art Schalter verstanden werden, der entweder offen (entspricht dem Wert "0") oder geschlossen (entspricht dem Wert "1") sein kann. Die Anzahl der Gatter sowie die geschaltete Kombination der XOR- oder XNOR-Gatter 38, 40 sind als Erzeugerfunktion 42 bezeichnet, die eine bestimmte Pseudozufallsbinärsignal-Folge (PRBS) am Ausgang 36 des Schieberegisters 24 erzeugt. Die Anzahl der nebeneinander liegenden Bits des Schieberegisters 24, die nicht in die Rückkopplungsberechnung eingehen, ist minimiert.

Die genaue Abfolge und Länge einer am Ausgang 36 erzeugten Pseudozufallsbinärsignal-Folge (PRBS) bestimmt sich nach der Erzeugerfunktion 42, das heißt nach der Anzahl m der Stufen des Schieberegisters 24 sowie nach der in die Berechnung des Schieberegisters 24 eingehenden Kombination von XOR-Gattern 38, 40. Die XOR-Gatter 38, 40 werden möglichst so geschalten, dass beim Erzeugen der ersten Wertetabelle (56) nach Anspruch 6 oder der dritten Wertetabelle (66) Absolutpositionen ausschließlich in Zeilen der ersten (56) oder dritten Wertetabelle (66) geschrieben werden, die mit "nicht korrigierbarer Fehler" gekennzeichnet sind. Das Schieberegister 24 wird anfangs mit einer nicht-trivialen Bitfolge als Startwert befüllt, so dass jede Taktung des Schieberegisters 24 eine mittels der Erzeugerfunktion 42 erzeugte Pseudozufallsbinärsignal-Folge (PRBS) am Ausgang 36 ausgibt. In diesem Ausführungsbeispiel wird die nicht-triviale Bitfolge der Nullposition (1000) der Maßverkörperung 8 als Startwert verwendet.

Das Schieberegister 24 kann zwei verschiedene Aufgaben innerhalb des Positionsmesssystems 4 übernehmen. Eine erste Aufgabe besteht darin, die auf die absolutkodierte Maßverkörperung 8 aufzubringenden Pseudozufallsbinärsignal-Folgen (PRBS) für jede unterscheidbare Position entlang der Maßverkörperung 8 zu erzeugen. Eine zweite Aufgabe des Schieberegisters 24 könnte auch darin bestehen, mit diesem die Absolutposition der Abtasteinrichtung 14 zu bestimmen. Hierfür könnte das Schieberegister 24 mit der Bitfolge der Nullposition der Maßverkörperung 8 befüllt und so oft über den Eingang 26 getaktet werden, bis die am Ausgang 36 des Schieberegisters 24 erzeugte Bitfolge mit dem Abtastwert der Abtasteinrichtung 14 übereinstimmt. Die Anzahl der erfassten Taktungen wäre ein Maß für die Absolutlage der Abtasteinrichtung 14 gegenüber der Maßverkörperung 8. Für diese zweite Aufgabe müsste die Auswerteeinrichtung 18 ein solches Schieberegister 24 aufweisen.

Erfindungsgemäß wird das Schieberegister 24 zwar für die Erzeugung der einzelnen Pseudozufallsbinärsignal-Folge (PRBS) der Maßverkörperung 8 verwendet, muss jedoch nicht zwingend für die Absolutpositionsbestimmung der Abtasteinrichtung 14 gegenüber der Maßverkörperung 8 verwendet werden. Die erfindungsgemäße Bestimmung beziehungsweise Überprüfung der Absolutposition der Abtasteinrichtung 14 wird im Folgenden beschrieben.

Für die Auswertung der abgetasteten Maßverkörperung 8 werden zwei verschiedene Ausführungsformen des Positionsmesssystems 4 vorgeschlagen, die nachfolgend erläutert werden.

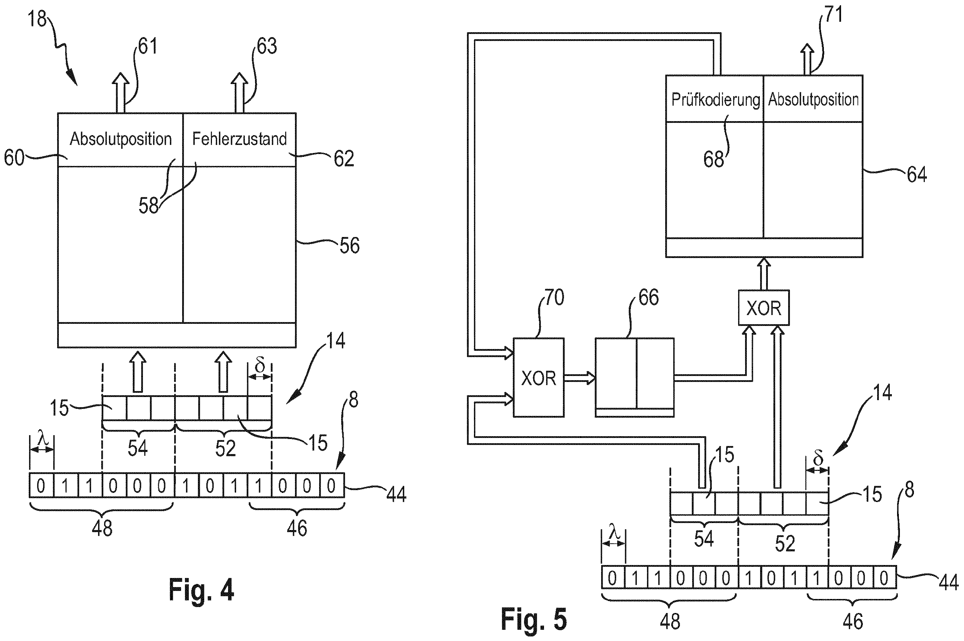

Figur 4 zeigt in einem ersten Ausführungsbeispiel eine grobschematische Ansicht von einem Teil des Positionsmesssystems 4, insbesondere der Maßverkörperung 8, der Abtasteinrichtung 14 und der Auswerteeinrichtung 18. Mit diesem dargestellten Teil des Positionsmesssystems 4 sind eine Abtastung der Maßverkörperung 8 sowie eine vergleichende Auswertung mit einer Prüfkodierung als Referenzwert zur Fehlererkennung und/oder Fehlerkorrektur möglich.

Die in Figur 4 dargestellte absolutkodierte Maßverkörperung 8 weist eine einzige Spur mit einer Bitfolge 44 auf, die mittels des Schieberegisters 24 erzeugt wurde. Die Maßverkörperung wird dabei beispielsweise von einem langgestreckten Metallblech gebildet, in dem eine Vielzahl von einer Reihe angeordneten Markierungen eingebracht sind, die jeweils zwei unterschiedliche Werte annehmen können. Bei den Markierungen kann es sich um Löcher in dem Metallband handeln. Ein Loch repräsentiert den Zustand 1, ein nicht vorhandenes Loch den Zustand 0. Eine Markierung kann auch zwei Untermarkierungen aufweisen, die invers zueinander gewählt sind, so dass sich die Abtastsicherheit verbessert. Die Markierungen weisen vorzugsweise einen konstanten Teilungsabstand zueinander auf. Die Bitfolge 44 ist eine Pseudozufallsbinärsignal-Folge (Pseudo-Random Binary Sequence (PRBS)) und umfasst in diesem Ausführungsbeispiel genau 13 Bits (0110001011000). Eine erste Teilbitfolge 46 der Bitfolge 44 umfasst in diesem Ausführungsbeispiel genau vier Bits (1000), die die Nullposition der Maßverkörperung repräsentieren. Diese entspricht dem Startwert des Schieberegisters 24. Eine zweite Bitfolge 48 der Bitfolge 44 wiederholt genau die Anzahl m+p-1 Bit (011000) vom Anfang der Bitfolge 44, damit allen Einzelsensoren 15 in allen sieben unterscheidbaren Absolutpositionen Markierungen der Maßverkörperung 8 gegenüberliegen. Die Bitfolge 44 ist dabei so gewählt, dass die zur Fehlererkennung und/oder Fehlerkorrektur verwendete Redundanz möglichst gering und ein impliziter Teil der Pseudozufallsbinärsignal-Folge (PRBS) ist.

Zur Abtastung der absolutkodierten Maßverkörperung 8 bewegt sich die Abtasteinrichtung 14 entlang der Bitfolge 44 und ist dazu eingerichtet, eine Teilbitfolge mit genau n Bits gleichzeitig abzutasten, wobei n in diesem Ausführungsbeispiel sieben beträgt (n = 7). Diese abtastbare Teilbitfolge lässt sich in m Messbits 52 und p Prüfbits 54 unterteilen, wobei in diesem Ausführungsbeispiel m gleich vier (m = 4) und p gleich drei (p = 3) ist. Hierfür sind Einzelsensoren 15 vorgesehen, die beispielsweise elektrische Spulen umfassen können, um die Anwesenheit eines Loches in der Maßverkörperung 8 zu erkennen. Die Einzelsensoren 15 weisen einen konstanten Teilungsabstand δ auf, der wie dargestellt gleich dem Teilungsabstand λ der Maßverkörperung 8 sein kann. Es kann jedoch auch daran gedacht sein, den Teilungsabstand δ der Einzelsensoren 15 entsprechend der DE 10 2011 106 940 A1 kleiner zu wählen, damit die Abtastvorrichtung nicht nur in der in Fig. 4 gezeigten Stellung ideal arbeitet, sondern auch in etwas verschobenen Stellungen, bei denen die Einzelsensoren 15 nicht genau über einer zugeordneten Markierung angeordnet sind. Dabei kommen k Einzelsensoren zum Abtasten von n Markierungen bzw. Bits der Maßverkörperung 8 zum Einsatz, wobei k > n gilt. Der Teilungsabstand der Einzelsensoren δ beträgt dann δ = λ × n ÷ k. Aus den Abtastsignalen der Einzelsensoren werden dann in der aus der DE 10 2011 106 940 A1 bekannten Weise die Messwerte für die einzelnen Markierungen der Maßverkörperung 8 ermittelt, die dann erfindungsgemäß weiterverwendet werden.

Aus Figur 4 geht weiter hervor, dass die Auswerteeinrichtung 18 eine erste Wertetabelle 56 umfasst, die mit den Messwerten für die einzelnen Markierungen der Maßverkörperung 8, nämlich den Messbits 52 und den Prüfbits 54, adressierbar ist. Die erste Wertetabelle 56 gibt in jeder Zeile eine Prüfkodierung 58 an, die einen bestimmten Absolutpositionswert 60 sowie einen zugehörigen Fehlerzustand 62 umfasst. Folglich ist es nicht notwendig, das Schieberegister 24 in der Auswerteeinrichtung 18 zu implementieren, da mittels der vorgehaltenen Prüfkodierung 58 und deren Vergleich mit den Abtastwerten der ersten Abtasteinrichtung 14, die Absolutposition derselben eindeutig bestimmt beziehungsweise die Abtastwerte auf einen möglichen Fehler überprüft werden kann.

Mithilfe des auslesbaren Fehlerzustands 62 ist es zudem möglich, den möglichen Fehler zu klassifizieren. Dabei kann der Fehlerzustand 62 für einen bestimmten Absolutpositionswert 60 drei unterschiedliche Werte annehmen, nämlich "kein Fehler", "korrigierbarer Fehler" oder "nicht korrigierbarer Fehler". Durch die Adressierung der Wertetabelle 56 mit dem Abtastergebnis der ersten Abtasteinrichtung 14 lassen sich somit ein bestimmter Absolutpositionswert 60 sowie sein Fehlerzustand 62 auffinden und auslesen. Durch eine vergleichende Auswertung, das heißt durch einen Vergleich des Abtastergebnisses der ersten Abtasteinrichtung 14 mit dem Absolutpositionswert 60 lässt sich somit ein Fehler, der durch verschiedene Störeinflüsse beim Abtasten auftreten kann, erkennen und in Abhängigkeit des zugeordneten Fehlerzustands 62 auch korrigieren.

Sollte beispielsweise ein bestimmter Absolutpositionswert 60 einen Fehlerzustand 62 mit dem Wert "korrigierbarer Fehler" oder "nicht korrigierbarer Fehler" aufweist, kann die Auswerteeinrichtung 18 auf einen Fehler beim Abtasten der Maßverkörperung 8 schließen, da das Abtastergebnis der ersten Abtasteinrichtung 14 keine gültige, das heißt keine mit "kein Fehler" gekennzeichnete, Absolutposition ergibt. Bemerkenswert ist allerdings, dass ein solcher 1-Bit-Fehler korrigierbar sein kann, wobei hierfür die Bedingung zu erfüllen ist, dass maximal m = 2^{p}-p-1 Messbits vorhanden sind. Sollte der Fehlerzustand 62 eines bestimmten Absolutpositionswertes 60 allerdings "kein Fehler" lauten, wäre diese Absolutposition gültig, weshalb die Auswerteinrichtung 18 auf eine korrekte Abtastung und/oder eine gültige Absolutposition schließen würde. Eine gültige Absolutposition zeichnet sich dadurch aus, dass die abgetastete Bitfolge tatsächlich auf der Maßverkörperung 8 vorhanden ist. Die Auswerteeinrichtung 18 gibt nach der Auswertung des Abtastergebnisses einen Positionswert 61 und ein Fehlersignal 63 aus, die in dem Linearlager 1 und/oder der Linearführung 2 zur Steuerung derselben verwendet beziehungsweise weiterverarbeitet werden.

Die erste Wertetabelle 56 kann dabei wie nachfolgend dargestellt gestaltet sein.

| **Index** | **Adresse** | **Position** | **Fehlerinformation** |
|---|---|---|---|
| 0 | 0000000 | | nicht korrigierbarer Fehler |
| 1 | 0000001 | | nicht korrigierbarer Fehler |
| 2 | 0000010 | | nicht korrigierbarer Fehler |
| 3 | 0000011 | 3 | korrigierbarer Fehler |
| 4 | 0000100 | | nicht korrigierbarer Fehler |
| 5 | 0000101 | 4 | korrigierbarer Fehler |
| 6 | 0000110 | 2 | korrigierbarer Fehler |
| 7 | 0000111 | | nicht korrigierbarer Fehler |
| 8 | 0001000 | | nicht korrigierbarer Fehler |
| 9 | 0001001 | 3 | korrigierbarer Fehler |
| 10 | 0001010 | 3 | korrigierbarer Fehler |
| 11 | 0001011 | 3 | kein Fehler |
| 12 | 0001100 | 1 | korrigierbarer Fehler |
| 13 | 0001101 | | nicht korrigierbarer Fehler |
| 14 | 0001110 | | nicht korrigierbarer Fehler |
| 15 | 0001111 | 3 | korrigierbarer Fehler |
| 16 | 0010000 | | nicht korrigierbarer Fehler |
| 17 | 0010001 | 6 | korrigierbarer Fehler |
| 18 | 0010010 | 2 | korrigierbarer Fehler |
| 19 | 0010011 | | nicht korrigierbarer Fehler |
| 20 | 0010100 | 2 | korrigierbarer Fehler |
| 21 | 0010101 | | nicht korrigierbarer Fehler |
| 22 | 0010110 | 2 | kein Fehler |
| 23 | 0010111 | 2 | korrigierbarer Fehler |
| 24 | 0011000 | 0 | korrigierbarer Fehler |
| 25 | 0011001 | | nicht korrigierbarer Fehler |
| 26 | 0011010 | | nicht korrigierbarer Fehler |
| 27 | 0011011 | 3 | korrigierbarer Fehler |
| 28 | 0011100 | | nicht korrigierbarer Fehler |
| 29 | 0011101 | | nicht korrigierbarer Fehler |
| 30 | 0011110 | 2 | korrigierbarer Fehler |
| 31 | 0011111 | | nicht korrigierbarer Fehler |
| 32 | 0100000 | | nicht korrigierbarer Fehler |
| 33 | 0100001 | 6 | korrigierbarer Fehler |
| 34 | 0100010 | 5 | korrigierbarer Fehler |
| 35 | 0100011 | | nicht korrigierbarer Fehler |
| 36 | 0100100 | 1 | korrigierbarer Fehler |
| 37 | 0100101 | | nicht korrigierbarer Fehler |
| 38 | 0100110 | | nicht korrigierbarer Fehler |
| 39 | 0100111 | | nicht korrigierbarer Fehler |
| 40 | 0101000 | 1 | korrigierbarer Fehler |
| 41 | 0101001 | | nicht korrigierbarer Fehler |
| 42 | 0101010 | | nicht korrigierbarer Fehler |
| 43 | 0101011 | 3 | korrigierbarer Fehler |
| 44 | 0101100 | 1 | kein Fehler |
| 45 | 0101101 | 1 | korrigierbarer Fehler |
| 46 | 0101110 | 1 | korrigierbarer Fehler |
| 47 | 0101111 | | nicht korrigierbarer Fehler |
| 48 | 0110000 | 6 | korrigierbarer Fehler |
| 49 | 0110001 | 6 | kein Fehler |
| 50 | 0110010 | | nicht korrigierbarer Fehler |
| 51 | 0110011 | 6 | korrigierbarer Fehler |
| 52 | 0110100 | | nicht korrigierbarer Fehler |
| 53 | 0110101 | 6 | korrigierbarer Fehler |
| 54 | 0110110 | 2 | korrigierbarer Fehler |
| 55 | 0110111 | | nicht korrigierbarer Fehler |
| 56 | 0111000 | | nicht korrigierbarer Fehler |
| 57 | 0111001 | 6 | korrigierbarer Fehler |
| 58 | 0111010 | | nicht korrigierbarer Fehler |
| 59 | 0111011 | | nicht korrigierbarer Fehler |
| 60 | 0111100 | 1 | korrigierbarer Fehler |
| 61 | 0111101 | | nicht korrigierbarer Fehler |
| 62 | 0111110 | | nicht korrigierbarer Fehler |
| 63 | 0111111 | | nicht korrigierbarer Fehler |
| 64 | 1000000 | | nicht korrigierbarer Fehler |
| 65 | 1000001 | 4 | korrigierbarer Fehler |
| 66 | 1000010 | 5 | korrigierbarer Fehler |
| 67 | 1000011 | | nicht korrigierbarer Fehler |
| 68 | 1000100 | 4 | korrigierbarer Fehler |
| 69 | 1000101 | 4 | kein Fehler |
| 70 | 1000110 | | nicht korrigierbarer Fehler |
| 71 | 1000111 | 4 | korrigierbarer Fehler |
| 72 | 1001000 | 0 | korrigierbarer Fehler |
| 73 | 1001001 | | nicht korrigierbarer Fehler |
| 74 | 1001010 | | nicht korrigierbarer Fehler |
| 75 | 1001011 | 3 | korrigierbarer Fehler |
| 76 | 1001100 | | nicht korrigierbarer Fehler |
| 77 | 1001101 | 4 | korrigierbarer Fehler |
| 78 | 1001110 | | nicht korrigierbarer Fehler |
| 79 | 1001111 | | nicht korrigierbarer Fehler |
| 80 | 1010000 | 0 | korrigierbarer Fehler |
| 81 | 1010001 | | nicht korrigierbarer Fehler |
| 82 | 1010010 | | nicht korrigierbarer Fehler |
| 83 | 1010011 | | nicht korrigierbarer Fehler |
| 84 | 1010100 | | nicht korrigierbarer Fehler |
| 85 | 1010101 | 4 | korrigierbarer Fehler |
| 86 | 1010110 | 2 | korrigierbarer Fehler |
| 87 | 1010111 | | nicht korrigierbarer Fehler |
| 88 | 1011000 | 0 | kein Fehler |
| 89 | 1011001 | 0 | korrigierbarer Fehler |
| 90 | 1011010 | 0 | korrigierbarer Fehler |
| 91 | 1011011 | | nicht korrigierbarer Fehler |
| 92 | 1011100 | 0 | korrigierbarer Fehler |
| 93 | 1011101 | | nicht korrigierbarer Fehler |
| 94 | 1011110 | | nicht korrigierbarer Fehler |
| 95 | 1011111 | | nicht korrigierbarer Fehler |
| 96 | 1100000 | 5 | korrigierbarer Fehler |
| 97 | 1100001 | | nicht korrigierbarer Fehler |
| 98 | 1100010 | 5 | kein Fehler |
| 99 | 1100011 | 5 | korrigierbarer Fehler |
| 100 | 1100100 | | nicht korrigierbarer Fehler |
| 101 | 1100101 | 4 | korrigierbarer Fehler |
| 102 | 1100110 | 5 | korrigierbarer Fehler |
| 103 | 1100111 | | nicht korrigierbarer Fehler |
| 104 | 1101000 | | nicht korrigierbarer Fehler |
| 105 | 1101001 | | nicht korrigierbarer Fehler |
| 106 | 1101010 | 5 | korrigierbarer Fehler |
| 107 | 1101011 | | nicht korrigierbarer Fehler |
| 108 | 1101100 | | nicht korrigierbarer Fehler |
| 109 | 1101101 | | nicht korrigierbarer Fehler |
| 110 | 1101110 | | nicht korrigierbarer Fehler |
| 111 | 1101111 | | nicht korrigierbarer Fehler |
| 112 | 1110000 | 1 | korrigierbarer Fehler |
| 113 | 1110001 | 6 | korrigierbarer Fehler |
| 114 | 1110010 | 5 | korrigierbarer Fehler |
| 115 | 1110011 | | nicht korrigierbarer Fehler |
| 116 | 1110100 | | nicht korrigierbarer Fehler |
| 117 | 1110101 | | nicht korrigierbarer Fehler |
| 118 | 1110110 | | nicht korrigierbarer Fehler |
| 119 | 1110111 | | nicht korrigierbarer Fehler |
| 120 | 1111000 | 0 | korrigierbarer Fehler |
| 121 | 1111001 | | nicht korrigierbarer Fehler |
| 122 | 1111010 | | nicht korrigierbarer Fehler |
| 123 | 1111011 | | nicht korrigierbarer Fehler |
| 124 | 1111100 | | nicht korrigierbarer Fehler |
| 125 | 1111101 | | nicht korrigierbarer Fehler |
| 126 | 1111110 | | nicht korrigierbarer Fehler |
| 127 | 1111111 | | nicht korrigierbarer Fehler |

Figur 5 zeigt ein zweites Ausführungsbeispiel für die Abtastung und Auswertung der Maßverkörperung 8, das alternativ zu dem in Figur 4 gezeigten Ausführungsbeispiel eingesetzt werden kann. Die Erzeugung und der Aufbau der abzutastenden Maßverkörperung 8, insbesondere der Bitfolge 44, entsprechen jedoch genau dem oben anhand von Figur 4 erläuterten Ausführungsbeispiel.

In der in Figur 5 dargestellten Ausführungsvariante verfügt die Auswerteeinrichtung 18 über zwei separate Wertetabellen, nämlich eine zweite Wertetabelle 64 und eine dritte Wertetabelle 66. Die zweite Wertetabelle 64 ist eine Messwerttabelle, die mit den Messbits 52 der ersten Abtasteinrichtung 14 adressiert wird und in jeweils einer Zeile einen unterscheidbaren Absolutpositionswert in Form einer Teilfolge einer Pseudozufallsbinärsignal-Folge (PRBS) enthält. Zudem ist in der jeweiligen Zeile der Wertetabelle 64 in Form einer Prüfkodierung 68 angegeben, wie sich die Pseudozufallsbinärsignal-Folge (PRBS) rechnerisch fortsetzen müsste. Das heißt, dass die Messwerttabelle 64 eine Prüfkodierung 68 mit einer Bitfolge umfasst, deren Bitanzahl der Anzahl der Prüfbits 54 der ersten Abtasteinrichtung 14 entspricht.

Weiter weist die Auswerteeinrichtung 18 ein erstes XOR-Gatter 70 auf, dass die aus der zweiten Wertetabelle 64 ausgelesene Prüfkodierung 68 eines bestimmten Absolutpositionswertes mit den Prüfbits 54 der ersten Abtasteinrichtung 14 XORverknüpft. Mittels der Auswerteeinrichtung 18 ist dann überprüfbar, ob das Ergebnis dieser XOR-Verknüpfung Null ist. Wenn das Ergebnis Null ist, liegt kein Fehler bei der Abtastung der Maßverkörperung 8 beziehungsweise bei der Absolutpositionsbestimmung vor. Wenn das Ergebnis ungleich Null ist, enthält das Ergebnis eine Information über die Bit-Position des somit erkannten Fehlers.

Die dritte Wertetabelle 66 ist eine Prüfwertetabelle, die mit der XOR-Verknüpfung des XOR-Gatters 70 adressierbar ist, und die in jeweils einer Zeile einen Korrekturwert und einen Fehlerstatus enthält. Das heißt, dass die zweite Wertetabelle 66 mit einer XOR-Verknüpfung, die die Prüfkodierung 68 der zweiten Wertetabelle 64 mit den Prüfbits 54 der ersten Abtasteinrichtung 14 verknüpft, adressiert wird. Dadurch wird das gegebenenfalls fehlerhafte Bit invertiert. Für den in der zweiten Wertetabelle 66 angegebenen Fehlerstatus sind drei unterschiedliche Werte möglich, nämlich "kein Fehler", "korrigierbarer Fehler" oder "nicht korrigierbarer Fehler".

In der Zeile Null der zweiten Wertetabelle 66 beträgt der Korrekturwert Null und der zugehörige Fehlerstatus entspricht dem Wert "kein Fehler". In den übrigen Zeilen der zweiten Wertetabelle 66 ist der Korrekturwert zunächst jeweils als "korrigierbarer Fehler" gekennzeichnet, wobei der zugehörige Korrekturwert ausschließlich an der Bit-Position eine Eins enthält, an der ein Fehler vorhanden ist. Bei einer ausreichenden Anzahl von Prüfbits beziehungsweise Paritätsbits kann das Ergebnis der XOR-Verknüpfung des XOR-Gatters 70 auch Fehler anzeigen, die nicht korrigierbar sind. Der Fehlerzustand der betreffenden Zeile wird dann auf "nicht korrigierbarer Fehler" gesetzt. Die Auswerteeinrichtung 18 gibt anschließend ein gegebenenfalls korrigiertes Positionssignal 71 aus.

Die zweite Wertetabelle 64 und die dritte Wertetabelle 66 können wie nachfolgend dargestellt gestaltet sein.

**Zweite Wertetabelle 64:**

| **Messwert** | **Absolutposition** | **rechnerische Reihenfortsetzung bzw. Prüfkodierung** |
|---|---|---|
| 1000 | 0 | 101 |
| 1100 | 1 | 010 |
| 0110 | 2 | 001 |
| 1011 | 3 | 000 |
| 0101 | 4 | 100 |
| 0010 | 5 | 110 |
| 0001 | 6 | 011 |

**Dritte Wertetabelle 66:**

| **Prüfwertvergleich** | **Korrekturwert** | **Fehlerstatus** |
|---|---|---|
| 000 | 0000000 | kein Fehler |
| 001 | 0000001 | korrigierbarer Fehler |
| 010 | 0000010 | korrigierbarer Fehler |
| 101 | 0000100 | korrigierbarer Fehler |
| 011 | 0001000 | korrigierbarer Fehler |
| 111 | 0010000 | korrigierbarer Fehler |
| 110 | 0100000 | korrigierbarer Fehler |
| 100 | 1000000 | korrigierbarer Fehler |

Ausgehend von den dargestellten Ausführungsbeispielen kann die Erfindung in vielerlei Hinsicht abgewandelt werden. Es ist zum Beispiel denkbar, dass die zweite Messwertetabelle 66 durch ein Schieberegister ersetzt wird, wobei die Prüfkodierung 68, das heißt die rechnerische Fortsetzung der betrachteten Pseudozufallsbinärsignal-Folge (PRBS), mittels einer geeigneten Erzeugerfunktion dynamisch erzeugt wird.

Weiter ist es denkbar, dass die Auswerteeinrichtung 18 nicht in den Messkopf integriert ist, sondern in einem separaten Teil des Linearlagers 1 oder der Linearführung 2 aufgenommen ist. Darüber hinaus ist es denkbar, dass die Auswerteeinrichtung 18 als integrierter Schaltkreis in Form eines FPGA ausgeführt ist.

Offenbart ist ein Positionsmesssystem mit einem ersten Teil und einem gegenüber dem ersten Teil bewegbaren zweiten Teil. Das erste Teil weist eine Maßverkörperung mit einer an dieser entlang angeordneten Vielzahl von Markierungen auf, die jeweils zwei voneinander unterschiedliche Werte annehmen können. Eine Anzahl m unmittelbar aufeinander folgender Markierungen codiert jeweils eine eindeutige Absolutposition entlang der Maßverkörperung und eine Anzahl m-1 unmittelbar aufeinander folgender Markierungen codiert keine eindeutige Absolutposition. Das zweite Teil weist eine Abtasteinrichtung mit einer Anzahl k von Einzelsensoren zur Abtastung von einer Anzahl n unmittelbar aufeinander folgender Markierungen auf, wobei die Abtasteinrichtung zur Positionsermittlung des zweiten Teils gegenüber dem ersten Teil mit einer Auswerteeinrichtung funktional verbunden ist. Erfindungsgemäß ist die Bedingung n > m erfüllt, wobei mittels der Auswerteeinrichtung ein Abtastfehler der Abtasteinrichtung erkennbar ist.

### Bezugszeichenliste

- 1: Linearlager
- 2: Linearführung (erstes Teil)
- 4: Positionsmesssystem
- 6: Führungswagen (zweites Teil)
- 8: absolutkodierte Maßverkörperung
- 10: inkrementelle Maßverkörperung
- 12: Messkopf
- 14: erste Abtasteinrichtung
- 15: Einzelsensor
- 16: zweite Abtasteinrichtung
- 18: Auswerteeinrichtung
- 20: Mikroprozessor
- 22: Speicher
- 24: rückgekoppeltes Schieberegister
- 26: Eingang
- 28a bis 28d: D-Flip-Flop
- 30a bis 30d: Takt-Eingang
- 32a bis 32d: Dateneingang
- 34a bis 34d: Datenausgang
- 36: Ausgang
- 38: erstes XOR-Gatter
- 40: zweites XOR-Gatter
- 42: Erzeugerfunktion
- 44: Bitfolge der Maßverkörperung (Vielzahl von Markierungen)
- 46: Teilbitfolge
- 48: Teilbitfolge
- 52: Messbits
- 54: Prüfbits
- 56: erste Wertetabelle
- 58: Prüfkodierung
- 60: Absolutpositionswert
- 61: Positionswert
- 62: Fehlerzustand
- 63: Fehlersignal
- 64: zweite Wertetabelle
- 66: dritte Wertetabelle
- 68: Prüfkodierung
- 70: XOR-Gatter
- 71: Positionssignal

- m: Anzahl von Markierungen der Maßverkörperung 8
- k: Anzahl von Einzelsensoren 15 der ersten Abtasteinrichtung 14
- λ: Teilungsabstand der Markierungen der Maßverkörperung
- δ: Teilungsabstand der Einzelsensoren 15

## Patentansprüche

1. Verfahren zur Verwendung eines Positionsmesssystems (4) mit einem ersten Teil (2) und einem gegenüber dem ersten Teil bewegbaren zweiten Teil (6), wobei das erste Teil (2) eine Maßverkörperung (8) mit einer Vielzahl von in einer Reihe angeordneten Markierungen (44) aufweist, die jeweils zwei voneinander unterschiedliche Werte annehmen können, wobei sie einen konstanten Teilungsabstand λ aufweisen, wobei jeweils eine Anzahl m unmittelbar aufeinander folgender Markierungen (44) eine eindeutige Absolutposition entlang der Maßverkörperung (8) codiert und eine Anzahl m-1 unmittelbar aufeinander folgender Markierungen keine eindeutige Absolutposition codieren, wobei das zweite Teil (6) eine Abtasteinrichtung (14) mit einer Anzahl k von Einzelsensoren (15) zur Abtastung von einer Anzahl n unmittelbar aufeinander folgender Markierungen (44) aufweist, wobei der Teilungsabstand δ der Einzelsensoren δ = λ × n ÷ k beträgt und wobei die Abtasteinrichtung (14) zur Positionsermittlung des zweiten Teils (6) gegenüber dem ersten Teil (2) mit einer Auswerteeinrichtung (18) funktional verbunden ist, wobei die Bedingung n > m erfüllt ist, wobei mittels der Auswerteeinrichtung (18) eine erste Wertetabelle (56) mit einer Vielzahl von Zeilen vorhaltbar und/oder erzeugbar ist, wobei jede Zeile eine Positionsinformation (60) und eine Fehlerinformation (62) enthält, wobei mittels der Auswerteeinrichtung (18) ein Abtastfehler der Einzelsensoren (15) der Abtasteinrichtung (14) erkennbar ist, indem folgende Schritte ausgeführt werden:
- Auswählen einer bestimmten Zeile der ersten Wertetabelle (56) anhand der Messwerte für die einzelnen Markierungen der Maßverkörperung (8)
- Ausgeben eines Positionswertes und/oder eines Fehlersignals aus der bestimmten Zeile,
wobei das Verfahren folgende Schritte aufweist:
a) Markieren sämtlicher Zeilen der ersten Wertetabelle (56) mit der Fehlerinformation (62) "nicht korrigierbarer Fehler",
b) Eintragen einer eindeutigen Absolutposition als Positionsinformation für jede Stellung, die das zweite Teil (6) gegenüber dem ersten Teil (2) einnehmen kann, wobei die betreffende Zeile mit der Fehlerinformation (62) "kein Fehler" markiert wird,
c) Invertieren der Messwerte für die einzelnen Markierungen der Maßverkörperung (8) der Abtasteinrichtung (14) für jede Stellung des zweiten Teils (6) gegenüber dem ersten Teil (2), wobei die entsprechende Zeile der ersten Wertetabelle (56) nach dem Invertieren mit der Fehlerinformation (62) "korrigierbarer Fehler" markiert wird.

2. Verfahren zur Verwendung eines Positionsmesssystems (4) mit einem ersten Teil (2) und einem gegenüber dem ersten Teil bewegbaren zweiten Teil (6), wobei das erste Teil (2) eine Maßverkörperung (8) mit einer Vielzahl von in einer Reihe angeordneten Markierungen (44) aufweist, die jeweils zwei voneinander unterschiedliche Werte annehmen können, wobei sie einen konstanten Teilungsabstand λ aufweisen, wobei jeweils eine Anzahl m unmittelbar aufeinander folgender Markierungen (44) eine eindeutige Absolutposition entlang der Maßverkörperung (8) codiert und eine Anzahl m-1 unmittelbar aufeinander folgender Markierungen keine eindeutige Absolutposition codieren, wobei das zweite Teil (6) eine Abtasteinrichtung (14) mit einer Anzahl k von Einzelsensoren (15) zur Abtastung von einer Anzahl n unmittelbar aufeinander folgender Markierungen (44) aufweist, wobei der Teilungsabstand δ der Einzelsensoren δ = λ × n ÷ k beträgt und wobei die Abtasteinrichtung (14) zur Positionsermittlung des zweiten Teils (6) gegenüber dem ersten Teil (2) mit einer Auswerteeinrichtung (18) funktional verbunden ist, wobei die Bedingung n > m erfüllt ist, wobei mittels der Auswerteeinrichtung (18) eine zweite (64) und eine dritte Wertetabelle (66) vorhaltbar und/oder erzeugbar sind, wobei die zweite Wertetabelle (64) eine Vielzahl von Zeilen aufweist und jede Zeile eine Positionsinformation und eine Fehlerinformation enthält,
wobei die Fehlererkennungsinformationen auf die zweite und die dritte Wertetabelle (64; 66) aufgeteilt sind,
wobei mittels der Auswerteeinrichtung (18) ein Abtastfehler der Einzelsensoren (15) der Abtasteinrichtung (14) erkennbar ist, indem folgende Schritte ausgeführt werden:
a) Auswählen einer bestimmten Zeile der zweiten Wertetabelle (64) anhand einer Anzahl m von Messwerten für die einzelnen Markierungen der Maßverkörperung (8),
b) Auswählen einer bestimmten Zeile der dritten Wertetabelle (66) anhand einer XOR-Verknüpfung der Messwerte für die verbleibenden n-m Markierungen mit einem aus der bestimmten Zeile der zweiten Wertetabelle (64) erhaltenen Hilfswert,
c) Korrigieren der Abtastwerte aus Schritt a) mittels eines Korrekturwertes, der der bestimmten Zeile der dritten Wertetabelle (66) aus Schritt b) entnommen wird,
d) Auswählen einer bestimmten Zeile der zweiten Wertetabelle (64), anhand der unter Schritt c) korrigierten Abtastwerte, und Ausgeben der entsprechenden Positionsinformation (71) dieser bestimmten Zeile.

3. Verfahren nach Anspruch 1 oder 2, wobei die Vielzahl von Markierungen (44) der Maßverkörperung (8) mittels eines Schieberegisters (24) erzeugbar ist, das eine Anzahl m von Flip-Flops (28a bis 28d) aufweist, wobei wenigstens eine XOR- oder XNOR-Verknüpfung (38, 40) eines Ausgangs-Flip-Flops (28d) mit wenigstens einem weiteren Flip-Flop (28b) des Schieberegisters (24) auf ein Eingangs-Flip-Flop (28a) rückgekoppelt ist.

4. Verfahren nach Anspruch 3, wobei mittels einer geeigneten Auswahl des wenigstens einen weiteren Flip-Flops (28b bis 28d) festlegbar ist, dass beim Erzeugen der ersten Wertetabelle (56) oder der dritten Wertetabelle (66) Absolutpositionen ausschließlich in Zeilen der ersten (56) oder dritten Wertetabelle (66) geschrieben werden, die mit "nicht korrigierbarer Fehler" gekennzeichnet sind.

5. Verfahren nach einem der vorstehenden Ansprüche, wobei das Positionsmesssystem (4) Bestandteil einer Linearführung (1) ist.

6. Verfahren nach einem der vorstehenden Ansprüche, wobei die Bedingung 2^{(n-m)} > n erfüllt ist, wobei mittels der Auswerteinrichtung (18) ein Abtastfehler wenigstens eines der Einzelsensoren (15) der Abtasteinrichtung (14) korrigierbar ist.

7. Verfahren nach Anspruch 6, wobei die Bedingung 2^{(n-m-1)} < n erfüllt ist.

## Claims

1. Method for the use of a position measuring system (4), having a first portion (2) and a second portion (6), which can be moved relative to the first portion, wherein the first portion (2) has a material measure (8) having a multiplicity of markings (44) arranged in series that are each able to assume two different values, wherein they have a constant separation distance λ, wherein a respective number m of directly successive markings (44) codes an explicit absolute position along the material measure (8) and a number m-1 of directly successive markings do not code an explicit absolute position, wherein the second portion (6) has a scanning device (14) with a number k of individual sensors (15) for scanning a number n of directly successive markings (44), wherein the separation distance δ of the individual sensors is δ = λ × n ÷ k and wherein the scanning device (14) is functionally connected to an evaluation device (18) in order to ascertain the position of the second portion (6) relative to the first portion (2), wherein the condition n > m is satisfied, wherein the evaluation device (18) can be used to keep and/or produce a first table of values (56) with a multiplicity of rows, wherein each row contains a piece of position information (60) and a piece of error information (62), wherein the evaluation device (18) can be used to recognize a scanning error in the individual sensors (15) of the scanning device (14), by carrying out the following steps:
- selection of a particular row in the first table of values (56) using the measured values for the individual markings of the material measure (8),
- output of a position value and/or of an error signal from the particular row,
wherein the method has the following steps:
a) marking of all of the rows in the first table of values (56) with the error information (62) "uncorrectable error",
b) entry of an explicit absolute position as position information for each position that the second portion (6) can adopt relative to the first portion (2), wherein the relevant row is marked with the error information (62) "no error",
c) inversion of the measured values for the individual markings of the material measure (8) of the scanning device (14) for each position of the second portion (6) relative to the first portion (2), wherein the relevant row in the first table of values (56) is marked with the error information (62) "correctable error" following the inversion.

2. Method for the use of a position measuring system (4), having a first portion (2) and a second portion (6), which can be moved relative to the first portion, wherein the first portion (2) has a material measure (8) having a multiplicity of markings (44) arranged in series that are each able to assume two different values, wherein they have a constant separation distance λ, wherein a respective number m of directly successive markings (44) codes an explicit absolute position along the material measure (8) and a number m-1 of directly successive markings do not code an explicit absolute position, wherein the second portion (6) has a scanning device (14) with a number k of individual sensors (15) for scanning a number n of directly successive markings (44), wherein the separation distance δ of the individual sensors is δ = λ × n ÷ k and wherein the scanning device (14) is functionally connected to an evaluation device (18) in order to ascertain the position of the second portion (6) relative to the first portion (2), wherein the condition n > m is satisfied, wherein the evaluation device (18) can be used to keep and/or produce a second (64) and a third (66) table of values, wherein the second table of values (64) has a multiplicity of rows and each row contains a piece of position information and a piece of error information, wherein the error recognition information is divided over the second and third tables of values (64; 66), wherein the evaluation device (18) can be used to recognize a scanning error in the individual sensors (15) of the scanning device (14), by carrying out the following steps:
a) selection of a particular row in the second table of values (64) using a number m of measured values for the individual markings of the material measure (8),
b) selection of a particular row in the third table of values (66) using an XOR function for the measured values for the remaining n-m markings with an auxiliary value obtained from the particular row in the second table of values (64),
c) correction of the samples from step a) by means of a correction value that is taken from the particular row in the third table of values (66) from step b),
d) selection of a particular row in the second table of values (64), using the samples corrected under step c), and output of the relevant position information (71) in this particular row.

3. Method according to Claim 1 or 2, wherein the multiplicity of markings (44) of the material measure (8) can be produced by means of a shift register (24) that has a number m of flipflops (28a to 28d), wherein at least one XOR or XNOR function (38, 40) for an output flipflop (28d) with at least one further flipflop (28b) of the shift register (24) is fed back to an input flipflop (28a).

4. Method according to Claim 3, wherein suitable selection of the at least one further flipflop (28b to 28d) is used to stipulate that, when the first table of values (56) or the third table of values (66) is produced, absolute positions are written exclusively to rows of the first (56) or third (66) table of values that are denoted by "uncorrectable error".

5. Method according to one of the preceding claims, wherein the position measuring system (4) is part of a linear guide (1).

6. Method according to one of the preceding claims, wherein the condition 2^{(n-m)} > n is satisfied, wherein the evaluation device (18) can be used to correct a scanning error in at least one of the individual sensors (15) of the scanning device (14) .

7. Method according to Claim 6, wherein the condition 2^{(n-m-1)} < n is satisfied.

## Revendications

1. Procédé d'utilisation d'un système (4) de mesure de position qui présente une première partie (2) et une deuxième partie (6) mobile par rapport à la première partie,
la première partie (2) présentant un ensemble de mesure (8) doté de plusieurs repères (44) disposés en rangées, pouvant prendre chacun deux valeurs différentes l'une de l'autre et présentant une distance de division λ constante,
un nombre m de repères (44) successifs codant une position absolue univoque le long de l'ensemble de mesure (8) et un nombre m-1 de repères immédiatement successifs ne codant pas de position absolue univoque,
la deuxième partie (6) présentant un dispositif de palpage (14) qui présente un nombre k de capteurs distincts (15) qui palpent un nombre n de repères (44) immédiatement successifs,
la distance de division δ des capteurs distincts étant δ = λ x n ÷ k et le dispositif de palpage (14) étant raccordé fonctionnellement à un dispositif d'évaluation (18) pour déterminer la position de la deuxième partie (6) par rapport à la première partie (2),
la condition n > m étant satisfaite,
un premier tableau (56) de valeurs présentant plusieurs lignes pouvant être réservé et/ou formé au moyen du dispositif d'évaluation (18),
chaque ligne contenant une information de position (60) et une information d'erreur (62),
une erreur de palpage des capteurs distincts (15) du dispositif de palpage (14) pouvant être détectée au moyen du dispositif d'évaluation (18) en exécutant les étapes suivantes :
sélection d'une ligne définie du premier tableau (56) de valeurs à l'aide des valeurs de mesure de certains repères de l'ensemble de mesure (8),
émission d'une valeur de position et/ou d'un signal d'erreur à partir de la ligne définie,
le procédé présentant les étapes suivantes :
a) repérage de toutes les lignes du premier tableau (56) de valeurs qui présentent l'information d'erreur (62) "erreur non corrigible",
b) introduction d'une position absolue univoque en tant qu'information de position pour chaque emplacement que la deuxième partie (6) peut prendre par rapport à la première partie (2), la ligne concernée étant repérée par l'information d'erreur (62) "pas d'erreur",
c) inversion des valeurs de mesure pour les repères de l'ensemble de mesure (8) du dispositif de palpage (14) pour chaque emplacement de la deuxième partie (6) vis-à-vis de la première partie (2), la ligne correspondante du premier tableau (56) de valeurs étant repérée par l'information d'erreur (62) "erreur corrigible" après l'inversion.

2. Procédé d'utilisation d'un système (4) de mesure de position qui présente une première partie (2) et une deuxième partie (6) mobile par rapport à la première partie,
la première partie (2) présentant un ensemble de mesure (8) doté de plusieurs repères (44) disposés en rangées, pouvant prendre chacun deux valeurs différentes l'une de l'autre et présentant une distance de division λ constante,
un nombre m de repères (44) successifs codant une position absolue univoque le long de l'ensemble de mesure (8) et un nombre m-1 de repères immédiatement successifs ne codant pas de position absolue univoque,
la deuxième partie (6) présentant un dispositif de palpage (14) qui présente un nombre k de capteurs distincts (15) qui palpent un nombre n de repères (44) immédiatement successifs,
la distance de division δ des capteurs distincts étant δ = λ x n ÷ k et le dispositif de palpage (14) étant raccordé fonctionnellement à un dispositif d'évaluation (18) pour déterminer la position de la deuxième partie (6) par rapport à la première partie (2),
la condition n > m étant satisfaite,
un deuxième tableau (64) et un troisième tableau (66) de valeurs pouvant être réservés et/ou formés au moyen du dispositif d'évaluation (18), le deuxième tableau (64) de valeurs présentant plusieurs lignes et chacune contenant une information de position et une information d'erreur,
les informations de détection d'erreur étant réparties sur le deuxième et le troisième tableau (64; 66) de valeurs,
une erreur de palpage des capteurs distincts (15) du dispositif de palpage (14) pouvant être détectée au moyen du dispositif d'évaluation (18) en exécutant les étapes suivantes :
a) sélection d'une ligne définie du deuxième tableau (64) de valeurs à l'aide d'un nombre m de valeurs de mesure des différents repères de l'ensemble de mesure (8),
b) sélection d'une ligne définie du troisième tableau (66) de valeurs à l'aide d'une liaison XOR des valeurs de mesure des n-m repères restants à l'aide d'une valeur auxiliaire obtenue à partir de la ligne définie du deuxième tableau (64) de valeurs,
c) correction des valeurs de palpage de l'étape a) au moyen d'une valeur de correction qui est prélevée dans la ligne définie du troisième tableau (66) de valeurs de l'étape b) et
d) sélection d'une ligne définie du deuxième tableau (64) de valeurs à l'aide des valeurs de palpage corrigées à l'étape c) et émission de l'information de position (71) correspondante de cette ligne définie.

3. Procédé selon les revendications 1 ou 2, dans lequel le nombre de repères (44) de l'ensemble de mesure (8) peut être formé au moyen d'un registre coulissant (24) qui présente un nombre m de bascules bistables (28a à 28d), au moins une liaison XOR ou XNOR (38, 40) d'une bascule bistable (28d) de sortie étant en rétroaction avec une bascule bistable (28a) d'entrée à l'aide d'au moins une autre bascule bistable (28b) du registre coulissant (24).

4. Procédé selon la revendication 3, dans lequel un nombre approprié de la ou des bascules bistables (28b à 28d) permet de définir si lors de la formation du premier tableau (56) de valeurs ou du troisième tableau (66) de valeurs, des positions absolues sont décrites exclusivement dans des lignes du premier tableau (56) ou du troisième tableau (66) de valeurs qui sont **caractérisées par** "erreur non corrigible".

5. Procédé selon l'une des revendications précédentes, dans lequel le système (4) de mesure de position fait partie d'un guide linéaire (1).

6. Procédé selon l'une des revendications précédentes, dans lequel la condition 2^{(n-m)} > n est satisfaite, une erreur de palpage d'au moins l'un des capteurs distincts (15) du dispositif de palpage (14) pouvant être corrigée au moyen du dispositif d'évaluation (18).

7. Procédé selon la revendication 6, dans lequel la condition 2^{(n-m-1)} < n est satisfaite.
